# EUROPEAN PATENT APPLICATION

(11) **EP 3 496 318 A1**
(43) Date of publication of application: **12.06.2019**
(21) Application number: 17836428.7
(22) Date of filing: 04.08.2017
(51) Int. Cl.: H04L 5/00, H04W 72/00, H04W 72/04

(54) **METHODS OF MAPPING AND DETECTING BROADCAST CHANNEL, BASE STATION, AND USER EQUIPMENT**

(30) Priority: 05.08.2016 CN 201610640649
(71) Applicant: NTT DOCOMO, INC., Tokyo 100-6150 (JP)
(72) Inventor: LIU, Jiahui, Beijing 100190 (CN); MU, Qin, Beijing 100190 (CN); LIU, Liu, Beijing 100190 (CN); JIANG, Huiling, Beijing 100190 (CN)
(74) Representative: Hoffmann Eitle
(86) International application number: PCT/CN2017/096006
(87) International publication number: WO 2018/024247

(57) **Abstract**

Provided are a method of mapping a broadcast channel and utilized in a base station in a time division duplex (TDD) mode, a method of detecting a broadcast channel and utilized in a user equipment in a TDD mode, base station and user equipment. The method of mapping a broadcast channel comprises: dividing a first broadcast channel into at least one first part and one second part; and mapping, to a second subframe in a plurality of subframes having an uplink-downlink configuration in the TDD mode, the first part of the first broadcast channel, and mapping, to the seventh subframe in the plurality of subframes, the second part of the first broadcast channel, wherein the second subframe is a special subframe, and the seventh subframe is a special subframe or a downlink subframe. The method is employed to follow a signal sequence design of a broadcast channel in a NB-IoT system in a FDD mode, and map, using a special subframe, the broadcast channel, without changing an uplink-downlink configuration of a NB-IoT system in the TDD mode.

## Description

### TECHNICAL FIELD

The present disclosure relates to a field of mobile communication, and more particularly to a method for mapping a broadcast channel in a time-division-duplex (TDD)-mode base station, a method for detecting a broadcast channel in a TDD-mode user equipment, the base station and the user equipment.

### BACKGROUND

In recent years, Narrow Band Internet of Things (NB-IoT) is being studied. Based on a conventional wireless communication network technology, NB-IoT transmits and receives information by using a narrow frequency band of approximately 180 KHz. In a NB-IoT system, two duplex modes, frequency division duplex (FDD) and time division duplex (TDD), may be used. In the FDD mode, uplink transmission and downlink transmission are performed in different frequencies, and in the TDD mode, the uplink transmission and the downlink transmission are performed at different time.

In NB-IoT, in order for a user equipment in a cell to perform cell search and attach to the cell, a base station maps a broadcast channel into a frame (particularly, a subframe in the frame) in downlink to transmit the broadcast channel to the user equipment. The broadcast channel includes a Primary Synchronization Signal (PSS) and a Secondary Synchronization Signal (SSS) for downlink synchronization, and a Physical Broadcast Channel (PBCH) for transmitting system information. The user equipment detects the broadcast channel and performs cell search and cell attachment accordingly.

In an FDD-mode NB-IoT system, each frame contains 10 subframes which may be represented as subframe #0 ∼ subframe #9. The PSS is mapped to a sixth subframe of each frame (subframe #5), thereby being transmitted once per frame (i.e., every 10ms). The SSS is mapped to a 10th subframe (subframe #9) of a next frame every other frame, thereby being transmitted once every other frame (i.e., every 20ms). The PBCH may be divided into 8 independently decodable blocks, and one independently decodable block is mapped on a first subframe (subframe #0) of each frame, so that the PBCH may be detected based on one or more of the 8 independently decodable blocks.

However, how to map the above broadcast channel has not been discussed in a TDD-mode NB-IoT system. Therefore, a method for mapping a broadcast channel and a corresponding method for detecting a broadcast channel in the TDD-mode NB-IoT system are needed.

### SUMMARY

According to an embodiment of the present disclosure, a method for mapping a first broadcast channel in a time-division-duplex (TDD)-mode base station is provided, the method comprising: dividing a first broadcast channel into at least a first part and a second part; and mapping the first part of the first broadcast channel to a second subframe of a plurality of subframes included in a frame having an uplink-downlink configuration of the TDD mode, and mapping the second part of the first broadcast channel to a seventh subframe of the plurality of subframes, where the second subframe is a special subframe, and the seventh subframe is a special subframe or a downlink subframe

The method according to the embodiment may further comprise: mapping a second broadcast channel and a third broadcast channel to a first subframe and a sixth subframe of the plurality of subframes respectively.

In the method according to the embodiment, the first broadcast channel, the second broadcast channel and the third broadcast channel may be one of a primary synchronization signal, a secondary synchronization signal and a physical broadcast channel respectively.

According to anther embodiment of the present disclosure, a time-division-duplex(TDD)-mode base station is provided, the base station comprising: a dividing unit, configured to divide a first broadcast channel into at least a first part and a second part; and a channel mapping unit, configured to map the first part of the first broadcast channel to a second subframe of a plurality of subframes included in a frame having an uplink-downlink configuration of the TDD mode, and map the second part of the first broadcast channel to a seventh subframe of the plurality of subframes, where the second subframe is a special subframe, and the seventh subframe is a special subframe or a downlink subframe.

In the base station according to the embodiment, the channel mapping unit may be further configured to map a second broadcast channel and a third broadcast channel to a first subframe and a sixth subframe of the plurality of subframes respectively.

In the base station according to the embodiment, the first broadcast channel, the second broadcast channel and the third broadcast channel may be one of a primary synchronization signal, a secondary synchronization signal and a physical broadcast channel respectively.

According to anther embodiment of the present disclosure, a method for detecting a first broadcast channel in a time-division-duplex(TDD)-mode user equipment is provided, the method comprising: receiving a plurality of subframes included in at least one frame having an uplink-downlink configuration of the TDD mode; and detecting the first broadcast channel based on at least one of a second subframe and a seventh subframe of the plurality of subframes.

The method according to the embodiment may further comprise: detecting a second broadcast channel based on a first subframe of the plurality of subframes; and detecting a third broadcast channel based on a sixth subframe of the plurality of subframes.

In the method according to the embodiment, the first broadcast channel may be a physical broadcast channel, and the second broadcast channel and the third broadcast channel may be one of a primary synchronization signal and a secondary synchronization signal respectively.

In the method according to the embodiment, the detecting the first broadcast channel based on at least one of the second subframe and the seventh subframe of the plurality of subframes may comprise: detecting the physical broadcast channel based on data mapped in the second subframe; if the physical broadcast channel cannot be detected based on the data mapped in the second subframe, detecting the physical broadcast channel based on data mapped in the second subframe and the seventh subframe.

In the method according to the embodiment, the first broadcast channel may be one of a primary synchronization signal and a secondary synchronization signal respectively.

In the method according to the embodiment, the detecting the first broadcast channel based on at least one of the second subframe and the seventh subframe of the plurality of subframes may comprise: combining data mapped in the second subframe and the seventh subframe to generate a combined data sequence; and detecting the first broadcast channel based on the combined data sequence.

According to anther embodiment of the present disclosure, a time-division-duplex(TDD)-mode user equipment is provided, the user equipment comprising: a receiving unit, configured to receive a plurality of subframes included in at least one frame having an uplink-downlink configuration of the TDD mode; and a detecting unit, configured to detect a first broadcast channel based on at least one of a second subframe and a seventh subframe of the plurality of subframes.

In the user equipment according to the embodiment, the detecting unit may be further configured to detect a second broadcast channel based on a first subframe of the plurality of subframes, and detect a third broadcast channel based on a sixth subframe of the plurality of subframes.

In the user equipment according to the embodiment, the first broadcast channel may be a physical broadcast channel, and the second broadcast channel and the third broadcast channel may be one of a primary synchronization signal and a secondary synchronization signal respectively.

In the user equipment according to the embodiment, the detecting unit may be configured to detect the physical broadcast channel based on data mapped in the second subframe, and if the physical broadcast channel cannot be detected based on the data mapped in the second subframe, detect the physical broadcast channel based on data mapped in the second subframe and the seventh subframe.

In the user equipment according to the embodiment, the first broadcast channel may be one of a primary synchronization signal and a secondary synchronization signal respectively.

In the user equipment according to the embodiment, the detecting unit may be configured to combine data mapped in the second subframe and the seventh subframe to generate a combined data sequence, and detect the first broadcast channel based on the combined data sequence.

### BRIEF DESCRIPTION OF THE DRAWINGS

The foregoing and other objects, features and advantages of the present disclosure will become more apparent from the detailed description of embodiments of the present disclosure in conjunction with the accompanying drawings. The drawings are included to provide a further understanding of embodiments of the present disclosure, constitute a part of this specification, and help to explain the present disclosure together with the embodiments of the present disclosure, but are not intended to act as a limitation of the present disclosure. In the drawings, like reference numerals usually indicate like components or steps.
FIG. 1 is a schematic diagram of a NB-IoT system in which the embodiments of the present disclosure may be applied.
FIG. 2 a flow chart illustrating a method for mapping a broadcast channel in a time-division-duplex(TDD)-mode base station according to an embodiment of the present disclosure.
FIG. 3 is a schematic diagram showing a first example of mapping a broadcast channel.
FIG. 4 is a schematic diagram showing a second example of mapping a broadcast channel.
FIG. 5 is a schematic diagram showing a third example of mapping a broadcast channel.
FIG. 6 is block diagram illustrating a TDD-mode base station according to an embodiment of the present disclosure.
FIG. 7 a flow chart illustrating a method for detecting a broadcast channel in a TDD-mode user equipment according to an embodiment of the present disclosure.
FIG. 8 is block diagram illustrating a TDD-mode user equipment according to an embodiment of the present disclosure.

### DETAILED DESCRIPTION

In order to make the objectives, technical solutions and advantages of the present disclosure more apparent, exemplary embodiments according to the present disclosure will be described in detail below with reference to the drawings. Apparently, the described embodiments are only a part but not all of the embodiments of the present disclosure. It should be understood that the present disclosure is not limited by the exemplary embodiments described herein. All other embodiments obtained by a person skilled in the art based on the embodiments of the present disclosure described herein without creative effort fall within the scope of the present disclosure.

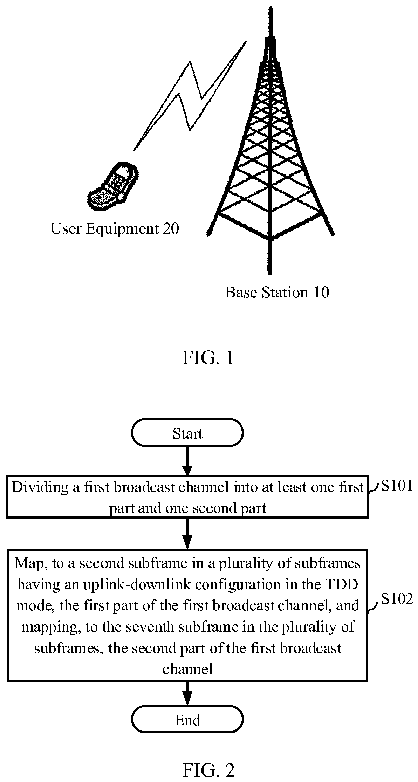

FIG. 1 shows a schematic diagram of a NB-IoT system in which the embodiments of the present disclosure may be applied. As shown in FIG. 1, the NB-IoT system includes a base station 10 and a user equipment 20, where the base station 10 transmits a broadcast message to the user equipment 20, and the user equipment receives and detects the broadcast message and performs a corresponding cell search and attachment. In this system, the base station 10 and the user equipment 20 communicate by using a frequency band of, for example, 180 kHz.

In a FDD-mode NB-IoT system, a Primary Synchronization Signal (PSS) may be generated based on a Zadoff-Chu sequence. For example, the PSS may be generated by multiplying a base sequence by a mask sequence, where the base sequence may be a Zadoff-Chu sequence of a length of 11, with a root sequence index of 5, and the mask sequence may be, for example, a sequence [1, 1, 1, 1, -1, -1, 1, 1, 1, -1, 1] or a sequence of which respective elements have other values, with a length of 11. A Secondary Synchronization Sequence (SSS) may be a sequence generated by scrambling a frequency-domain Zadoff-Chu sequence of a length of 131 by using a binary scrambling sequence. Furthermore, 8 independently decodable blocks may be generated for a PBCH, such that the PBCH may be detected by decoding any one of the independently decodable blocks or by combining two or more of the 8 independently decodable blocks and decoding them. Furthermore, in the FDD-mode NB-IoT system, the PSS is mapped to a sixth subframe (subframe #5) of each frame. The SSS is mapped to a 10th subframe (subframe #9) of a next frame every other frame, and one independently decodable block of the PBCH is mapped into a first subframe (subframe #0) of each frame. Methods for generating and mapping the PSS, the SSS and the PBCH in the FDD-mode NB-IoT system are known in the art, and therefore will not be described repeatedly herein.

In the TDD-mode NB-IoT system, 7 uplink-downlink configurations, i.e., 7 frame structures, are set for each frame, as shown in TABLE 1 below.

**TABLE 1 Uplink-downlink configuration**

| Uplink-downlink configuration | Uplink to downlink transition point period | Subframe No. | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 10ms | D | S | U | U | U | D | S | U | U | D |

As shown in TABLE 1, each uplink-downlink configuration includes three kinds of subframes, namely, uplink subframes (denoted as U), downlink subframes (denoted as D), and special subframes (denoted as S). In the 7 configurations, ratios of the uplink subframes to the downlink subframes are different. For example, in configuration 0, 2 subframes are allocated as downlink subframes, and 6 subframes are allocated as uplink subframes; and in configuration 1, 4 subframes are allocated as downlink subframes, and 4 subframes are allocated as uplink subframes. One of the above 7 configurations may be selected between a base station and a user equipment, according to various factors, such as uplink and downlink traffic. It can be seen that, for the 7 configurations, subframe #0 and subframe #5 are both allocated as downlink subframes, subframe #1 is allocated as a special subframe, and subframe #6 is allocated as a special subframe or a downlink subframe.

The special subframe may include a downlink pilot time slot (DwPTS), an uplink pilot time slot (UpPTS) and a guard interval (GP). There are 9 configurations for the special subframe, as shown in TABLE 2 below.

**TABLE 2 Special subframe configuration**

| Configuration | Normal cyclic prefix (CP) | | | | | | | | | | | | | |
|---|---|---|---|---|---|---|---|---|---|---|---|---|---|---|
| 0 | D | D | D | G | G | G | G | G | G | G | G | G | G | U |
| 1 | D | D | D | D | D | D | D | D | D | G | G | G | G | U |
| 2 | D | D | D | D | D | D | D | D | D | D | G | G | G | U |
| 3 | D | D | D | D | D | D | D | D | D | D | D | G | G | U |
| 4 | D | D | D | D | D | D | D | D | D | D | D | D | G | U |
| 5 | D | D | D | G | G | G | G | G | G | G | G | G | U | U |
| 6 | D | D | D | D | D | D | D | D | D | G | G | G | U | U |
| 7 | D | D | D | D | D | D | D | D | D | D | G | G | U | U |
| 8 | D | D | D | D | D | D | D | D | D | D | D | G | U | U |

In the above TABLE 2, "D" denotes the downlink pilot time slot, which may be used for downlink transmission, "G" denotes the guard interval, and "U" denotes the uplink pilot time slot, which may be used for uplink transmission. It can be seen that in configurations other than configurations 0 and 5, each special sub frame includes at least 6 OFDM symbols available for downlink transmission.

Broadcast channels (PSSs, SSSs, PBCH) used in the TDD-mode NB-IoT system may have the same signal sequence design as those in the FDD-mode NB-IoT system. However, how to map these broadcast channels has not been discussed in the TDD-mode NB-IoT system, as described above. If a broadcast channel mapping manner of the FDD-mode NB-IoT system is followed, since the 10th subframe is allocated for uplink, instead of downlink, in uplink-downlink configuration 0 of the TDD-mode NB-IoT system, SSSs of downlink cannot be mapped to the 10th subframe. In other words, in the TDD-mode NB-IoT system, the same broadcast channel mapping manner as the FDD-mode NB-IoT system cannot be used.

However, the inventors have noticed that, in the above 7 uplink-downlink configurations of the TDD-mode NB-IoT system, the second subframe (subframe #1) is allocated as a special subframe, and the seventh subframe (subframe # 7) is either allocated as a special subframe or as a downlink subframe, and since a special subframe comprises OFDM symbols which may be used for downlink transmission (as shown in TABLE 2), the second subframe and the seventh subframe may be used for transmission of downlink broadcast channels. Based on this discovery, a method for mapping a broadcast channel according to an embodiment of the present disclosure is proposed, which may be applied to the NB-IoT system, especially the TDD-mode NB-IoT system. However, this is not limitative, and the method may also be applied to other communication systems than the NB-IoT system.

A method for mapping a broadcast channel, a method for detecting a broadcast channel, and a corresponding base station and user equipment according to the embodiments of the present invention will be described below, with reference to the accompanying drawings.

First, a method for mapping a broadcast channel according to an embodiment of the present disclosure will be described below with reference to FIG. 2. Hereinafter, the broadcast channel is referred to as a first broadcast channel for convenience of description. It should be noted that terms "first", "second", "third" and so on used herein and hereinafter are merely for the purpose of identifying corresponding objects, rather than for describing the order or priority between the objects.

Referring to FIG. 2, in step S101, the first broadcast channel is divided into at least a first part and a second part. In particular, the first broadcast channel may be divided such that the first part of the first broadcast channel may be mapped into no more than 6 OFDM symbols, and the second part of the first broadcast channel may also be mapped to no more than 6 OFDM symbols. In this way, it may be ensured that the first part and the second part may be mapped into special subframes having one of the configurations 1-4 and 6-8 shown in TABLE 2.

Next, in step S102, the first part of the first broadcast channel is mapped to a second subframe of a plurality of subframes included in a frame having a TDD-mode uplink-downlink configuration, and the second part of the first broadcast channel is mapped to a seventh subframe of the plurality of subframes, where the second subframe is a special subframe and the seventh subframe is a special subframe or a downlink subframe. The TDD-mode uplink-downlink configuration is, for example, shown in TABLE 1, and in this embodiment, the plurality of subframes are 10 subframes.

In particular, the second subframe is allocated as a downlink subframe for uplink-downlink configurations 0-6 shown in TABLE 1, as described above, so if the frame has one of the uplink-downlink configurations 0-6, the first part of the first broadcast channel may be mapped into the second subframe. Moreover, the seventh subframe is allocated as a downlink subframe for uplink-downlink configurations 3-5 shown in TABLE 1, so if the frame has one of the uplink-downlink configurations 3-5, the second part of the first broadcast channel may be mapped into the seventh subframe. For uplink-downlink configurations 0, 1, 2 and 6 shown in TABLE 1, although their seventh subframe is allocated as a special subframe, each of the configurations 1-4 and 6-8 of the special subframe comprises at least 6 OFDM symbols which may be used for downlink transmission as described above, and therefore if the frame has one of the uplink-downlink configurations 0, 1, 2 and 6, the seventh subframe may be set to have one of the configurations 1-4 and 6-8 shown in TABLE 2, and the second part of the first broadcast channel is mapped to the seventh subframe of the frame.

In addition to mapping the first broadcast channel, a second broadcast channel and a third broadcast channel may also be mapped to a first subframe and a sixth subframe of the plurality of subframes included in the frame respectively. According to TABLE 1, both the first subframe and the sixth subframe are allocated as downlink subframes in any one of the uplink-downlink configurations, so the second broadcast channel and the third broadcast channel may be mapped to the two subframes respectively.

The above method for mapping the broadcast channel according to the embodiment of the present invention will be described below in conjunction with specific examples.

In a first example, the first broadcast channel is a PSS, the second broadcast channel and the third broadcast are one of an SSS and a PBCH respectively, i.e., the second broadcast channel is an SSS and the third broadcast channel is a PBCH, or the second broadcast channel is a PBCH and the third broadcast channel is an SSS. The PSS and the SSS may adopt the same signal sequence design as the FDD-mode NB-IoT system, as described above; moreover, 8 independently decodable blocks may be generated for the PBCH in the same manner as the FDD-mode NB-IoT system. In this example, a sequence of the PSS may be divided into two parts, such that a first part of the PSS sequence is mapped to a second subframe of 10 subframes included in a frame having, for example, one of the respective uplink-downlink configurations shown in TABLE 1, and that a second part of the PSS sequence is mapped to a seventh subframe of the 10 subframes included in the frame. Moreover, one of the SSS and the PBCH may be mapped to a first subframe of the frame, and the other one of the SSS and the PBCH may be mapped to a sixth subframe of the 10 subframes included in the frame. When the PBCH is mapped, for example, in a case of mapping the PBCH to the sixth subframe, one independently decodable block of the PBCH may be mapped to the sixth subframe of the frame, and the remaining 7 independently decodable blocks of the PBCH will be sequentially mapped to sixth subframes of the subsequent 7 frames.

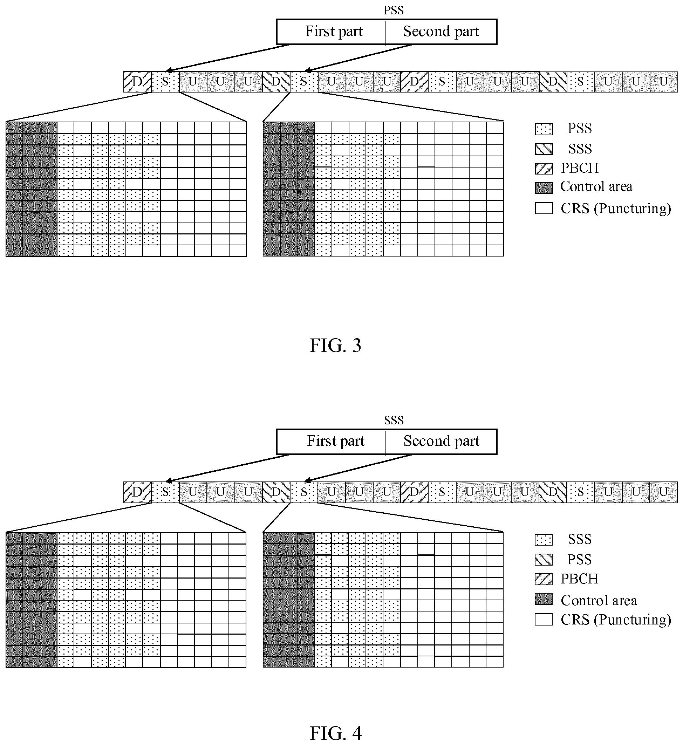

FIG. 3 shows the above first example of mapping the broadcast channel. In this example, the PSS is divided into two parts, which are respectively mapped to the second subframe and the seventh subframe of the frame, where first 6 elements of a mask sequence are used for the second subframe and its last 5 elements are used for the seventh subframe. In other examples, first 5 elements of a mask sequence are used for the second subframe and its last 6 elements are used for the seventh subframe. Moreover, the PBCH (in particular, one of its independently decodable blocks) is mapped to the first subframe of the frame, and the SSS is mapped to the sixth subframes of the frame.

In a second example, the first broadcast channel is an SSS, and the second broadcast channel and the third broadcast are one of a PSS and a PBCH respectively, i.e., the second broadcast channel is a PSS and the third broadcast channel is a PBCH, or the second broadcast channel is a PBCH and the third broadcast channel is a PSS. The PSS and the SSS may adopt the same signal sequence design as the FDD-mode NB-IoT system, as described above; moreover, 8 independently decodable blocks may be generated for the PBCH in the same manner as the FDD-mode NB-IoT system. In this example, a sequence of the SSS may be divided into two parts, such that the first part of the SSS sequence is mapped to a second subframe of 10 subframes included in a frame having, for example, one of the respective uplink-downlink configurations shown in TABLE 1, and that the second part of the SSS sequence is mapped to the seventh subframe of the frame. Moreover, one of the PSS and the PBCH may be mapped into a first subframe of the frame, and the other one of the PSS and the PBCH may be mapped into a sixth subframe of the frame. When the PBCH is mapped, for example, in a case of mapping the PBCH to the sixth subframe, one independently decodable block of the PBCH may be mapped into the sixth subframe of the frame, and the remaining 7 independently decodable blocks of the PBCH will be sequentially mapped into sixth subframes of the subsequent 7 frames.

FIG. 4 shows the above second example of mapping the broadcast channel. In this example, the SSS is divided into two parts, which are respectively mapped to the second subframe and the seventh subframe of the frame. Moreover, the PBCH (in particular, one of its independently decodable blocks) is mapped to the first subframe of the frame, and the PSS is mapped to the sixth subframe of the frame.

In a third example, the first broadcast channel is a PBCH, and the second broadcast channel and the third broadcast are one of a PSS and an SSS respectively, i.e., the second broadcast channel is a PSS and the third broadcast channel is an SSS, or the second broadcast channel is an SSS and the third broadcast channel is a PSS. In this example, the PSS and the SSS may adopt the same signal sequence design as the FDD-mode NB-IoT system, as described above; moreover, 16 independently decodable blocks may be generated for the PBCH in the same manner as the FDD-mode NB-IoT system, and a first independently decodable block is mapped as a first part to a second sub frame of 10 subframes included in a frame having, for example, one of the respective uplink-downlink configurations shown in TABLE 1, and a second independently decodable block of the PBCH is mapped as a second part to a seventh subframe of the 10 subframes included in the frame. The other independently decodable blocks of the PBCH may be sequentially mapped into second subframes and the seventh subframes of the subsequent 7 frames. Moreover, one of the PSS and the SSS may be mapped into the first subframe of the frame, and the other one of the PSS and the SSS may be mapped into the sixth subframe of the frame.

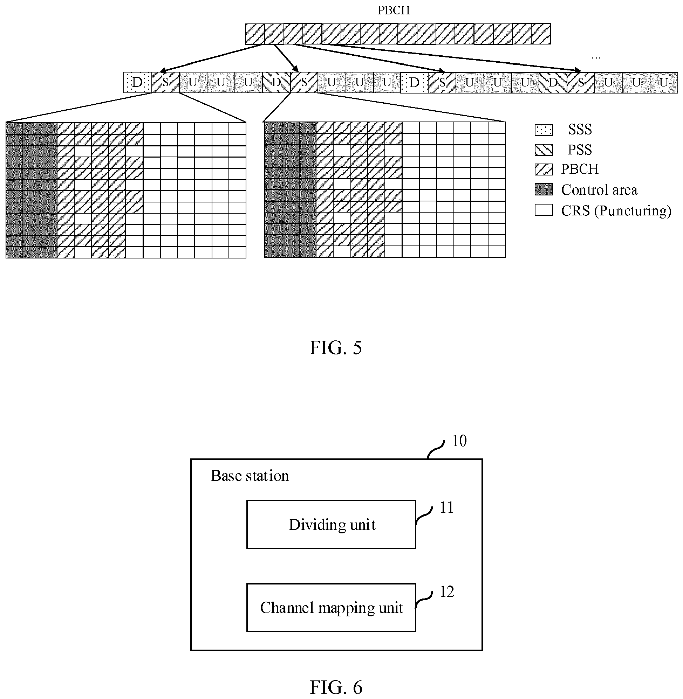

FIG. 5 shows the above third example of mapping the broadcast channel. In this example, the PBCH is divided into16 independently decodable blocks, where the first independently decodable block is mapped to the second subframe of the frame, the second independently decodable block is mapped to the seventh subframe of the frame, and the other independently decodable blocks are mapped to the second subframes and the seventh subframes of the subsequent 7 frames respectively. Moreover, the SSS is mapped to the first subframe of the frame, and the PSS is mapped to the sixth subframe of the frame.

Next, a base station according to an embodiment of the present invention will be described below with reference to FIG. 6, which may perform the above method for mapping a broadcast channel described with reference to Figures 2-5.

As shown in FIG. 6, the base station 10 includes a dividing unit 11 and a channel mapping unit 12. It should be noted that FIG. 6 shows only units of the base station 10 that are closely related to the embodiment of the present disclosure, and this merely illustrative. The base station 10 may include other units as needed.

The dividing unit 11 may divide a first broadcast channel into at least a first part and a second part. In particular, the dividing unit 11 may divide the first broadcast channel, such that the first part of the first broadcast channel may be mapped into no more than 6 OFDM symbols, and the second part of the first broadcast channel may also be mapped into no more than 6 OFDM symbols.

The channel mapping unit 12 may receive the output of the dividing unit 11, i.e., the first part and the second part of the first broadcast channel. The channel mapping unit 12 may then map the first part of the first broadcast channel to a second subframe of a plurality of subframes included in a frame having a TDD-mode uplink-downlink configuration, and map the second part of the first broadcast channel to a seventh subframe of the plurality of subframes, where the second subframe is a special subframe and the seventh subframe is a special subframe or a downlink subframe. The TDD-mode uplink-downlink configuration is, for example, shown in TABLE 1.

In particular, as described above, if the frame has one of the uplink-downlink configurations 0-6, the channel mapping unit 12 may map the first part of the first broadcast channel to the second subframe. Moreover, if the frame has one of the uplink-downlink configurations 3-5, the channel mapping unit 12 may map the second part of the first broadcast channel to the seventh subframe. If the frame has one of the uplink-downlink configurations 0, 1, 2 and 6, the channel mapping unit 12 may set the seventh subframe to have one of the configurations 1-4 and 6-8 shown in TABLE 2, and map the second part of the first broadcast channel into the seventh subframe of the frame.

In addition to mapping the first broadcast channel, the channel mapping unit 12 may map a second broadcast channel and a third broadcast channel to a first subframe and a sixth subframe of the plurality of subframes included in the frame respectively.

The above base station according to the embodiment of the present invention will be described below in conjunction with specific examples.

In the above first example in which the first broadcast channel is a PSS, and the second broadcast channel and the third broadcast are one of an SSS and a PBCH respectively, the dividing unit 11 may divide a sequence of the PSS into two parts. The channel mapping unit 12 may map the first part of the PSS sequence to the second subframe of 10 subframes included in a frame having, for example, one of the respective uplink-downlink configurations shown in TABLE 1, and map the second part of the PSS sequence to the seventh subframe of the 10 subframes included in the frame. Moreover, the channel mapping unit 12 may map one of the SSS and the PBCH into a first subframe of the frame, and map the other one of the SSS and the PBCH into a sixth subframe of the 10 subframes included in the frame. When mapping the PBCH, for example, in a case of mapping the PBCH to the sixth subframe, the channel mapping unit 12 may map one independently decodable block of the PBCH to the sixth subframe of the frame, and sequentially map the remaining 7 independently decodable blocks to sixth subframes of the subsequent 7 frames.

In the above second example in which the first broadcast channel is an SSS, and the second broadcast channel and the third broadcast are one of a PSS and a PBCH respectively, the dividing unit 11 may divide a sequence of the SSS into two parts. The channel mapping unit 12 may map the first part of the SSS sequence to the second sub frame of 10 subframes included in a frame having, for example, one of the respective uplink-downlink configurations shown in TABLE 1, and map the second part of the SSS sequence to the seventh subframe of the frame. Moreover, the channel mapping unit 12 may map one of the PSS and the PBCH into a first subframe of the frame, and the other one of the PSS and the PBCH into a sixth subframe of the frame. When mapping the PBCH, for example, in a case of mapping the PBCH to the sixth subframe, the channel mapping unit 12 may map one independently decodable block of the PBCH into the sixth subframe of the frame, and sequentially map the remaining 7 independently decodable blocks into sixth subframes of the subsequent 7 frames.

In the above third example in which the first broadcast channel is a PBCH, and the second broadcast channel and the third broadcast are one of a PSS and an SSS respectively, the dividing unit 11 may divide the PBCH into 16 independently decodable blocks. The channel mapping unit 12 may map a first independently decodable block as a first part to the second subframe of 10 subframes included in a frame having, for example, one of the uplink-downlink configurations shown in TABLE 1, and the second independently decodable block of the PBCH as a second part to the seventh subframe of the 10 subframes included in the frame. The channel mapping unit 12 may sequentially map the other independently decodable blocks of the PBCH into second subframes and seventh subframes of the subsequent 7 frames. Moreover, the channel mapping unit 12 may map one of the PSS and the SSS to a first subframe of the frame, and map the other one of the PSS and the SSS to a sixth subframe of the frame.

In this way, the same signal sequence design as the FDD-mode NB-IoT system may be followed in the TDD-mode NB-IoT system. By mapping the downlink broadcast channels using the special subframes of the uplink-downlink configurations, transmission of three types of broadcast channels to a user equipment may be realized without changing the uplink-downlink configurations of the TDD-mode NB-IoT system.

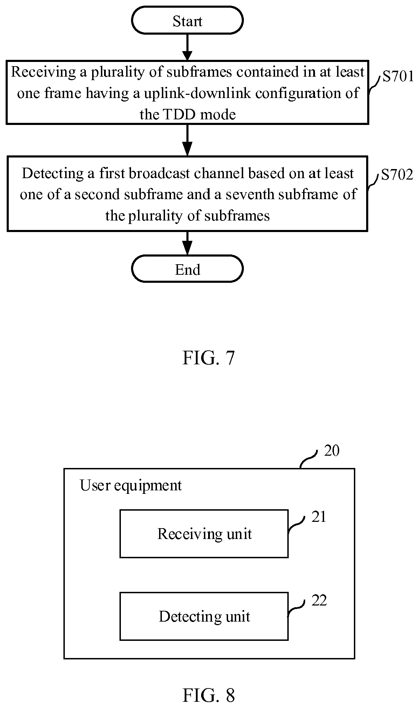

A method for detecting a broadcast channel according to an embodiment of the present invention will be described below with reference to FIG. 7. The method may be used in the TDD-mode NB-IoT system and may correspond to the method for mapping a broadcast channel described with reference to FIG. 2. The broadcast channel is referred to as a first broadcast channel herein in order to be consistent with the method for mapping a broadcast channel described with reference to FIG. 2.

As shown in FIG. 7, in step S701, a plurality of subframes included in at least one frame having a TDD-mode uplink-downlink configuration. The at least one frame may be received in a manner known in the art, which will not be described repeatedly herein.

Next, in step S702, the first broadcast channel is detected based on at least one of a second subframe and a seventh subframe of the plurality of subframes.

In addition to detecting the first broadcast channel, a second broadcast channel is also detected based on a first subframe of the plurality of subframes, and a third broadcast channel is detected based on a sixth subframe of the plurality of subframes.

The method for detecting a broadcast channel according to the embodiment of the present disclosure will be described below in conjunction with specific examples.

In a first example, the first broadcast channel may be a PSS. The second broadcast channel and the third broadcast channel may be one of an SSS and a PBCH respectively. For convenience of explanation, it is assumed that the second broadcast channel is an SSS, and the third broadcast channel is a PBCH. In the example, data mapped in the second subframe and the seventh subframe are combined to generate a combined data sequence. The PSS is then detected based on the combined data sequence. In this example, the PSS may be detected based on the combined data sequence using methods known in the art. In particular, the combined data sequence may be decoded using a blind decoding method to detect the PSS. For example, sliding correlation between the combined data sequence and a local sequence may be calculated, and a position of a peak of the correlation is a position of the PSS. Then, the SSS may be detected based on the first subframe, and the PBCH may be detected based on the sixth subframe. In this example, the SSS and the PBCH may be detected using methods known in the art, which will not be described repeatedly herein. It should be noted that, in this example, if the PBCH cannot be detected based on the sixth subframe, data (independently decodable blocks) mapped in the sixth subframe of the current frame and sixth subframes of subsequent one or more frames may be combined, and the PBCH is detected based on the combined data (combined independently decodable blocks).

In a second example, the first broadcast channel may be an SSS. The second broadcast channel and the third broadcast channel may be one of a PSS and a PBCH respectively. For convenience of explanation, it is assumed that the second broadcast channel is a PSS, and the third broadcast channel is a PBCH. In the example, first, the PSS may be detected based on the first subframe. Then, data mapped in the second subframe and the seventh subframe are combined to generate a combined data sequence. The SSS is then detected based on the combined data sequence. In this example, the SSS may be detected based on the combined data sequence using methods known in the art. Then, the PBCH may be detected based on the sixth subframe. In this example, the PSS and the PBCH may be detected using methods known in the art, which will not be described repeatedly herein. It should be noted that, in this example, if the PBCH cannot be detected based on the sixth subframe, data (independently decodable blocks) mapped in the sixth subframe of the current frame and sixth subframes of subsequent one or more frames may be combined, and the PBCH is detected based on the combined data (combined independently decodable blocks).

In a third example, the first broadcast channel may be a PBCH. The second broadcast channel and the third broadcast channel may be one of a PSS and an SSS respectively. For convenience of explanation, it is assumed that the second broadcast channel is a PSS, and the third broadcast channel is an SSS. In the example, first, the PSS may be detected based on the first subframe. The SSS is then detected based on the sixth subframe. In this example, the PSS and the SSS may be detected using methods known in the art, which will not be described repeatedly herein. Then, the PBCH may be detected. In this example, the data mapped in the second subframe and the seventh subframe are independently decodable blocks of the PBCH respectively, as described above. Thus, the PBCH may be detected based on the data (independently decodable blocks) mapped in the second subframe. If the decoding of the data mapped in the second subframe succeeds, the PBCH may be detected. On the contrary, if the decoding of the data mapped in the second subframe fails, the PBCH may be detected based on the data (independently decodable blocks) mapped in the second subframe and the seventh subframe. If the decoding of the data mapped in the second subframe and the seventh subframe succeeds, the PBCH may be detected. On the contrary, if the decoding fails, the PBCH may be detected based on the data mapped in the second subframe and the seventh subframe of the current frame, and one or more of data mapped in second subframes and seventh subframes of subsequent one or more frames (data mapped in a maximum of 16 subframes can be combined).

The first channel mapped to a special frame may be decoded successfully by using the above method.

A TDD-mode user equipment according to an embodiment of the present disclosure will be described below with reference to FIG. 8.

As shown in FIG. 8, the user equipment 20 includes a receiving unit 21 and a detecting unit 22. It should be noted that FIG. 8 shows only units of the user equipment 20 that are closely related to the embodiment of the present disclosure, and this merely illustrative. The user equipment 20 may include other units as needed.

The receiving unit 21 may receive a plurality of subframes included in at least one frame having a TDD-mode uplink-downlink configuration.

The detecting unit 22 may detect a first broadcast channel based on at least one of a second subframe and a seventh subframe of the plurality of subframes. In addition to detecting the first broadcast channel, the detecting unit 22 detects a second broadcast channel based on a first subframe of the plurality of subframes, and detects a third broadcast channel based on a sixth subframe of the plurality of subframes.

Operations of the detecting unit 22 will be described below in conjunction with specific examples.

In a first example, the first broadcast channel may be a PSS. The second broadcast channel and the third broadcast channel may be one of an SSS and a PBCH respectively. For convenience of explanation, it is assumed that the second broadcast channel is an SSS, and the third broadcast channel is a PBCH. In the example, the detecting unit 22 combines data mapped in the second subframe and the seventh subframe to generate a combined data sequence. The detecting unit 22 then detects the PSS based on the combined data sequence. Then, the detecting unit 22 may detect the SSS based on the first subframe, and detect the PBCH based on the sixth subframe. It should be noted that, in this example, if the PBCH cannot be detected based on the sixth subframe, the detecting unit 22 may combine data (independently decodable blocks) mapped in the sixth subframe of the current frame and sixth subframes of subsequent one or more frames, and detect the PBCH based on the combined data (combined independently decodable blocks).

In a second example, the first broadcast channel may be an SSS. The second broadcast channel and the third broadcast channel may be one of a PSS and a PBCH respectively. For convenience of explanation, it is assumed that the second broadcast channel is a PSS, and the third broadcast channel is a PBCH. In the example, first, the detecting unit 22 may detect the PSS based on the first subframe. Then, the detecting unit 22 may combine data mapped in the second subframe and the seventh subframe to generate a combined data sequence. The detecting unit 22 may then detect the SSS based on the combined data sequence. Then, the detecting unit 22 may detect the PBCH based on the sixth subframe. It should be noted that, in this example, if the PBCH cannot be detected based on the sixth subframe, the detecting unit 22 may combine data (independently decodable blocks) mapped in the sixth subframe of the current frame and sixth subframes of subsequent one or more frames, and detect the PBCH based on the combined data (combined independently decodable blocks).

In a third example, the first broadcast channel may be a PBCH. The second broadcast channel and the third broadcast channel may be one of a PSS and an SSS, respectively. For convenience of explanation, it is assumed that the second broadcast channel is a PSS, and the third broadcast channel is an SSS. In the example, first, the detecting unit 22 may detect the PSS based on the first subframe. Then, the detecting unit 22 may detect the SSS based on the sixth subframe. Then, the detecting unit 22 may detect the PBCH. In this example, the data mapped in the second subframe and the seventh subframe are independently decodable blocks of the PBCH respectively, as described above. Thus, the detecting unit 22 may detect the PBCH based on the data (independently decodable block) mapped in the second subframe. If the decoding of the data mapped in the second subframe succeeds, the PBCH may be detected. On the contrary, if the decoding of the data mapped in the second subframe fails, the detecting unit 22 may detect the PBCH based on the data (independently decodable blocks) mapped in the second subframe and the seventh subframe. If the decoding of the data mapped in the second subframe and the seventh subframe succeeds, the PBCH may be detected. On the contrary, if the decoding fails, the detecting unit 22 may detect the PBCH based on the data mapped in the second subframe and the seventh subframe of the current frame, and one or more of data mapped in second subframes and seventh subframes of subsequent one or more frames (data mapped in a maximum of 16 subframes can be combined).

With the above methods according to the embodiments of the present disclosure, the same signal sequence design as the FDD-mode NB-IoT system may be followed for broadcast channels PSSs, SSSs and PBCHs in the TDD-mode NB-IoT system, and the broadcast channels may be mapped into downlink subframes or special subframes to be transmitted to a user equipment. That is to say, by flexibly applying the special subframes in the uplink-downlink configurations, mapping of three types of broadcast channels may be realized in the NB-IoT system without changing the uplink-downlink configurations and the special subframe configurations of the TDD-mode NB-IoT system.

It should be noted that the terms "include", "comprise" or any other variations thereof in the specification are intended to encompass a non-exclusive inclusion, such that a process, method, article or device comprising a series of elements includes not only those elements, but also other elements that are not explicitly listed, or elements inherent to such a process, method, article or device. In the absence of further restrictions, an element defined by the phrase "comprising a..." dose not exclude the presence of additional equivalent elements in the process, method, article or device comprising the element.

Finally, it should be further noted that the series of processes described above include not only processes executed in time sequence in the order described herein, but also processes executed in parallel or separately rather than in time sequence.

Through the description of the above embodiments, those skilled in the art can clearly understand that the present disclosure may be implemented by means of software plus a necessary hardware platform, and certainly may also be implemented all by hardware. Based on such understanding, all or part of technical solutions of the present disclosure contributing to the background art may be embodied in the form of a computer software product that may be stored in a storage medium, such as a ROM/RAM, a magnetic disk, an optical disk or the like, and include several instructions to enable a computer device (such as, a personal computer, a server, or a network device, etc.) to execute the methods described in various embodiments or potions of the embodiments of the present disclosure.

The present disclosure has been described in detail above. Specific examples are used herein to explain the principles and embodiments of the present disclosure, and the description of the above embodiments is intended to help understand the methods of the present disclosure and core ideas thereof; in the meantime, changes shall be made in the specific implementations and application scope for those skilled in the art in light of the ideas of the present disclosure. In conclusion, the contents of this specification should not be construed as limitation of the present disclosure.

## Claims

1. A method for mapping a first broadcast channel in a time-division-duplex(TDD)-mode base station, comprising:
dividing a first broadcast channel into at least a first part and a second part; and
mapping the first part of the first broadcast channel to a second subframe of a plurality of subframes included in a frame having an uplink-downlink configuration of the TDD mode, and mapping the second part of the first broadcast channel to a seventh subframe of the plurality of subframes, where the second subframe is a special subframe, and the seventh subframe is a special subframe or a downlink subframe.

2. The method of claim 1, further comprising:
mapping a second broadcast channel and a third broadcast channel to a first subframe and a sixth subframe of the plurality of subframes respectively.

3. The method of claim 2, wherein the first broadcast channel, the second broadcast channel and the third broadcast channel are one of a primary synchronization signal, a secondary synchronization signal and a physical broadcast channel respectively.

4. A time-division-duplex(TDD)-mode base station, comprising:
a dividing unit, configured to divide a first broadcast channel into at least a first part and a second part; and
a channel mapping unit, configured to map the first part of the first broadcast channel to a second subframe of a plurality of subframes included in a frame having an uplink-downlink configuration of the TDD mode, and map the second part of the first broadcast channel to a seventh subframe of the plurality of subframes, where the second subframe is a special subframe, and the seventh subframe is a special subframe or a downlink subframe.

5. The base station of claim 4, wherein the channel mapping unit is further configured to map a second broadcast channel and a third broadcast channel to a first subframe and a sixth subframe of the plurality of subframes respectively.

6. The base station of claim 5, wherein the first broadcast channel, the second broadcast channel and the third broadcast channel are one of a primary synchronization signal, a secondary synchronization signal and a physical broadcast channel respectively.

7. A method for detecting a first broadcast channel in a time-division-duplex(TDD)-mode user equipment, comprising:
receiving a plurality of subframes included in at least one frame having an uplink-downlink configuration of the TDD mode;
detecting a first broadcast channel based on at least one of a second subframe and a seventh subframe of the plurality of subframes.

8. The method according to claim 7, further comprising:
detecting a second broadcast channel based on a first subframe of the plurality of subframes; and
detecting a third broadcast channel based on a sixth subframe of the plurality of subframes.

9. The method of claim 8, wherein the first broadcast channel is a physical broadcast channel, and the second broadcast channel and the third broadcast channel are one of a primary synchronization signal and a secondary synchronization signal respectively.

10. The method according to claim 9, wherein the detecting the first broadcast channel based on at least one of a second subframe and a seventh subframe of the plurality of subframes comprises:
detecting the physical broadcast channel based on data mapped in the second subframe; and
if the physical broadcast channel cannot be detected based on the data mapped in the second subframe, detecting the physical broadcast channel based on data mapped in the second subframe and the seventh subframe.

11. The method of claim 8, wherein the first broadcast channel is one of a primary synchronization signal and a secondary synchronization signal.

12. The method of claim 11, wherein the detecting the first broadcast channel based on at least one of a second subframe and a seventh subframe of the plurality of subframes comprises:
combining data mapped in the second subframe and the seventh subframe to generate a combined data sequence;
detecting the first broadcast channel based on the combined data sequence.

13. A time-division-duplex(TDD)-mode user equipment, comprising:
a receiving unit, configured to receive a plurality of subframes included in at least one frame having an uplink-downlink configuration of the TDD mode;
a detecting unit, configured to detect a first broadcast channel based on at least one of a second subframe and a seventh subframe of the plurality of subframes.

14. The user equipment of claim 13, wherein the detecting unit is further configured to detect a second broadcast channel based on a first subframe of the plurality of subframes, and detect a third broadcast channel based on a sixth subframe of the plurality of subframes.

15. The user equipment of claim 14, wherein the first broadcast channel is a physical broadcast channel, and the second broadcast channel and the third broadcast channel are one of a primary synchronization signal and a secondary synchronization signal respectively.

16. The user equipment of claim 15, wherein the detecting unit is configured to detect the physical broadcast channel based on data mapped in the second subframe, and if the physical broadcast channel cannot be detected based on the data mapped in the second subframe, detect the physical broadcast channel based on data mapped in the second subframe and the seventh subframe.

17. The user equipment of claim 14, wherein the first broadcast channel is one of a primary synchronization signal and a secondary synchronization signal.

18. The user equipment of claim 17, wherein the detecting unit is configured to combine data mapped in the second subframe and the seventh subframe to generate a combined data sequence, and detect the first broadcast channel based on the combined data sequence.
